# FASCICULE DE BREVET EUROPEEN

(11) **EP 4 363 784 B1**
(45) Date de publication et mention de la délivrance du brevet: **15.04.2026**
(21) Numéro de dépôt: 22733123.8
(22) Date de dépôt: 14.06.2022
(51) Int. Cl.: F28D 9/00, F28F 9/02, F28F 3/04

(54) **ECHANGEUR THERMIQUE POUR VÉHICULE AUTOMOBILE**
WÄRMETAUSCHER FÜR EIN KRAFTFAHRZEUG
HEAT EXCHANGER FOR A MOTOR VEHICLE

(30) Priorité: 29.06.2021 FR 2107002
(43) Date de publication de la demande: 08.05.2024
(73) Titulaire: Valeo Electrification, 95892 Cergy Pontoise (FR)
(72) Inventeur: TISSOT, Julien, 78320 Le Mesnil-Saint-Denis (FR); AZZOUZ, Kamel, 78320 Le Mesnil-Saint-Denis (FR); DURBECQ, Gael, 78320 Le Mesnil-Saint-Denis (FR); NACER BEY, Moussa, 78320 Le Mesnil-Saint-Denis (FR)
(74) Mandataire: Valeo Powertrain Systems
(86) Numéro de dépôt international: PCT/EP2022/066228
(87) Numéro de publication internationale: WO 2023/274722

(56) Documents cités:
- WO-A1-2015/043531
- US-A1- 2006 053 833
- US-A1- 2018 128 551
- US-A1- 2021 095 927

## Description

### Domaine technique

La présente invention se rapporte au domaine des échangeurs thermiques pour véhicules automobiles. Elle trouve une application privilégiée, mais non exclusive, aux échangeurs thermiques utilisés dans les circuits de climatisation de tels véhicules.

### Technique antérieure

La présente invention concerne plus particulièrement les échangeurs thermiques qui comprennent un premier circuit configuré pour acheminer un fluide réfrigérant et un deuxième circuit configuré pour acheminer un liquide caloporteur. Plus précisément, un tel échangeur lorsqu'il est utilisé en tant que condenseur, est généralement constitué de trois passes pour le premier circuit de réfrigérant et d'une seule passe pour le deuxième circuit de liquide caloporteur. Afin d'améliorer les performances thermiques, une circulation en contrecourant est employée sur les première et troisième passes, là où le réfrigérant est majoritairement monophasique, et une circulation en co-courant là où le réfrigérant est majoritairement diphasique pour obtenir un bon coefficient d'échange. Dans le cas d'une utilisation de la climatisation du véhicule en mode air climatisé, l'échangeur thermique n'est pas utilisé. Deux possibilités se présentent alors, soit de contourner entièrement l'échangeur thermique à l'aide de vannes, soit de faire circuler le fluide réfrigérant à l'intérieur de l'échangeur thermique mais sans y faire circuler le liquide caloporteur du deuxième circuit afin de ne pas apporter de chaleur au réchauffeur (heater-core en anglais). La seconde solution à l'avantage d'être moins onéreuse que la première solution, mais a le désavantage de dégrader le coefficient de performance de la climatisation. En effet, à cause de la perte de charge causée par les trois passes de l'échangeur thermique, la performance du système diminue.

Le document US 2021/095927 A1 divulgue un échangeur thermique selon le préambule de la revendication 1.

La présente invention a pour but de proposer une réduction des pertes de charge d'au moins un des circuits tout en concevant un échangeur thermique facile à assembler et moins encombrant.

### Exposé de l'invention

La présente invention a ainsi pour objet, un échangeur thermique pour véhicule automobile, selon la revendication 1.

Plusieurs modes de réalisation de l'invention sont divulgués dans les revendications dépendantes.

### Brève description des dessins

D'autres caractéristiques, détails et avantages de l'invention ressortiront plus clairement à la lecture de la description donnée ci-après à titre indicatif en relation avec des dessins dans lesquels :
[Fig 1] est une vue schématique d'ensemble d'un exemple de réalisation de l'échangeur thermique selon l'invention ;
[Fig 2] est une vue schématique d'une plaque destinée au premier circuit de l'échangeur thermique de la figure 1 montrant un premier mode de réalisation de l'invention ;
[Fig 3] est une vue schématique en coupe selon un plan vertical et transversal d'une chambre formée de deux plaques de l'échangeur thermique de la figure 1 selon un premier mode de réalisation de l'invention ;
[Fig 4] est une vue schématique d'une plaque déflectrice du premier circuit de l'échangeur thermique de la figure 1 selon un premier mode de réalisation de l'invention ;
[Fig 5] est une vue schématique en éclatée des circuits de l'échangeur thermique de la figure 1 selon un premier mode de réalisation de l'invention.

Il faut tout d'abord noter que si les figures exposent l'invention de manière détaillée pour sa mise en œuvre, ces figures peuvent bien entendu servir à mieux définir l'invention le cas échéant. Il est également à noter que ces figures n'exposent que quelques exemples de réalisation de l'invention.

### Description détaillée

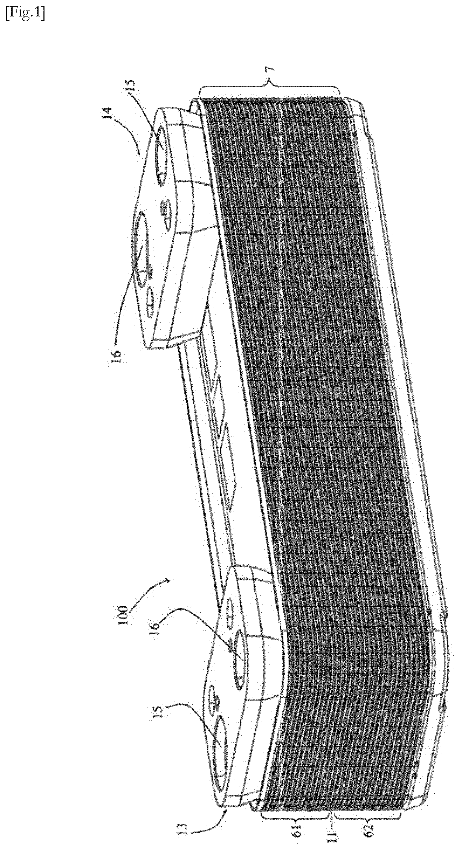

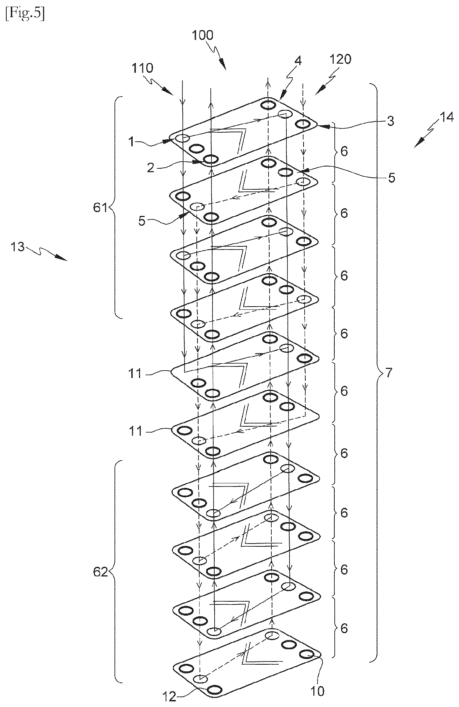

La figure 1 et 5 illustrent schématiquement en perspective et en éclaté, un échangeur thermique 100 selon l'invention et comprenant :
• un premier circuit 110 destiné à être parcouru par un fluide caloporteur et comprenant un premier collecteur d'entrée 1 par lequel le fluide caloporteur est admis dans le premier circuit 110 et un premier collecteur de sortie 2 par lequel le fluide caloporteur sort du premier circuit 110,
• un deuxième circuit 120 destiné à être parcouru par un fluide caloporteur, fluidiquement distinct du premier circuit 110 et comprenant un deuxième collecteur d'entrée 3 par lequel le fluide caloporteur est admis dans l'échangeur thermique 100 et un deuxième collecteur de sortie 4 par lequel le fluide caloporteur sort de l'échangeur thermique 100,
caractérisé en ce qu'au moins le premier circuit 110 ou le deuxième circuit 120 comprend un collecteur supplémentaire 5 s'étendant dans la même direction que les collecteurs d'entrées 1, 3 et de sorties 2, 4 du premier et deuxième circuits 110,120 et distincts de ces collecteurs 1, 2, 3, 4.

Le fluide caloporteur passant par le premier circuit et le fluide caloporteur passant par le deuxième circuit ne sont pas représentés dans les figures.

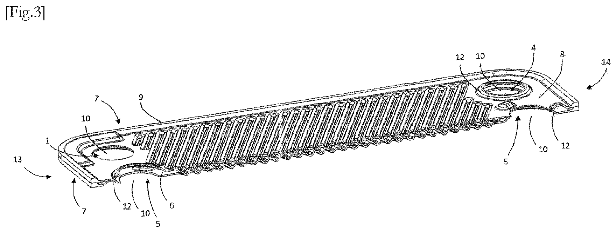

Comme illustré à la figure 3, chacun des circuits 110, 120 comprend une pluralité de chambres 6 fluidiquement reliées aux collecteurs d'entrée 1,3 et de sortie 2, 4 soit du premier circuit 110 soit du deuxième circuit 120.

Chaque chambre 6 est délimitée par au moins deux plaques 7. Chaque plaque 7 comprenant une paroi de fond 8 entourée par un bord relevé 9, la paroi de fond 8 étant pourvue d'une ouverture 10 par collecteur 1 à 5. On comprend ainsi que ladite ouverture délimite au moins en partie chaque collecteur d'entrée 1,3, les deux plaques 7 étant disposées l'une dans l'autre. De même, ladite ouverture délimite au moins en partie chaque collecteur de sortie 2,4. Ladite ouverture délimite également au moins en partie le collecteur supplémentaire 5..

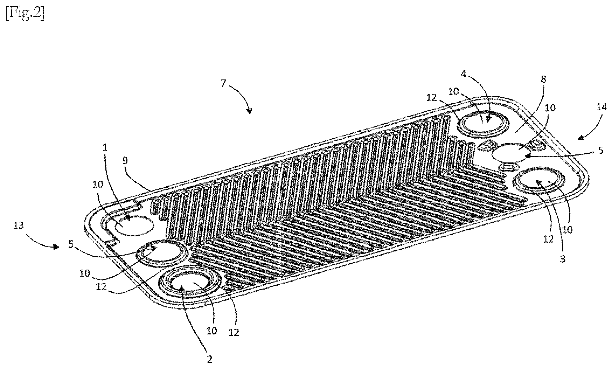

Les parois de fond 8 des plaques 7 délimitant les chambres 6 du premier circuit 110 ou du deuxième circuit 120 présentent une forme générale sensiblement plane et particulièrement visible aux figures 2 à 4. L'échangeur thermique 100 selon l'invention, et tel que représenté aux figures 1 et 5, est donc constitué d'un empilement de plaques 7 telles que précédemment décrites selon une direction d'empilement sensiblement perpendiculaire à une direction générale principale d'extension de la paroi de fond 8 de chacune de ces plaques 7. Il s'ensuit que chaque collecteur d'entrée 1, 3 ou de sorties 2, 4 précédemment évoqué est formé de l'empilement des ouvertures 10 précitées, percées dans les parois de fond 8 des plaques 7 délimitant les chambres 6 du premier circuit 110 ou du deuxième circuit 120. Chaque collecteur d'entrée 1,3 ou de sortie 2,4 du fluide caloporteur dans le premier circuit 110 ou le deuxième circuit 120 de l'échangeur 100 selon l'invention se présente donc sensiblement sous la forme d'un conduit qui s'étend au travers de l'échangeur thermique 100 selon l'invention. Selon un mode de réalisation privilégié, mais non exclusif, les ouvertures 10 ménagées dans les parois de fond 8 des plaques 7 constituant l'échangeur thermique 100 selon l'invention sont agencées de telle manière que chaque collecteur d'entrée 1,3 ou de sortie 2,4 précité s'étend sensiblement perpendiculairement aux parois de fond 8 des plaques 7 qui délimitent les chambres 6 du premier circuit 110 ou du deuxième circuit 120 et, donc, sensiblement parallèlement à la direction d'empilement des plaques 7 précitées.

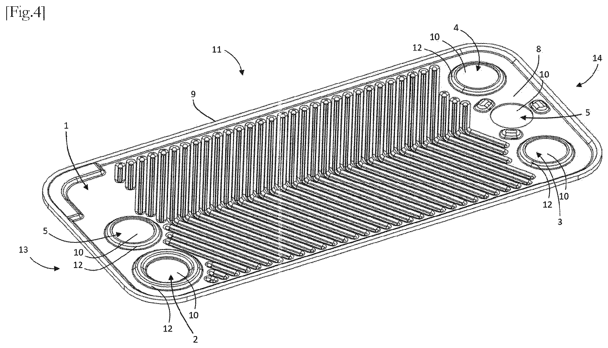

L'échangeur thermique 100 comprend un premier groupe de chambres 61 et un deuxième groupe de chambres 62 visibles en figure 1, le premier groupe de chambres 61 étant séparé du deuxième groupe de chambres 62 par au moins une plaque déflectrice 11 particulièrement visible à la figure 4 et destinée à imposer pour au moins le premier circuit 110 ou le deuxième circuit 120 une circulation au sein du premier groupe de chambres 61 selon un premier sens d'écoulement du fluide et d'imposer une circulation au sein du deuxième groupe de chambres 62 selon un deuxième sens d'écoulement du fluide tel que représenté schématiquement à la figure 5.

Le premier et deuxième groupe de chambres 61,62 comprennent un même nombre de plaques 7.

L'au moins une plaque déflectrice 11 comprend une paroi de fond 8 dépourvue d'ouverture 10 au sein du premier collecteur d'entrée 1 ou du deuxième collecteur d'entrée 3, selon le circuit destiné à avoir un deuxième sens d'écoulement du fluide.

Le premier circuit 110 et le deuxième circuit 120 comprennent chacun un collecteur supplémentaire 5.

L'échangeur thermique 100 peut également comprendre deux plaques déflectrices 11, permettant ainsi de réaliser un deuxième sens d'écoulement du fluide pour le premier circuit 110 et le deuxième circuit 120.

Les parois de fond 8 des plaques 7 du premier groupe de chambres 61 et délimitant les chambres 6 du premier circuit 110 ou du deuxième circuit 120 comprennent une bordure d'étanchéité 12 qui entoure chaque ouverture 10 du deuxième circuit 120 ou du premier circuit 110 ainsi que les ouvertures 10 du premier collecteur de sortie 2 ou du deuxième collecteur de sortie 4.

Les parois de fond 8 des plaques 7 du deuxième groupe de chambres 62 et délimitant les chambres 6 du premier circuit 110 ou du deuxième circuit 120 comprennent une bordure d'étanchéité 12 qui entoure chaque ouverture 10 du deuxième circuit 120 ou du premier circuit 110 ainsi que les ouvertures 10 du premier collecteur d'entrée 1 ou du deuxième collecteur d'entrée 3.

Les plaques 7 du premier groupe de chambres 61 et du deuxième groupe de chambres 62 sont alternées entre le premier circuit 110 et le deuxième circuit 120. Ceci permet de maximiser le coefficient d'échange thermique entre le fluide caloporteur du premier circuit 110 et le fluide caloporteur du deuxième circuit 120.

Chaque bordure d'étanchéité 12 est en contact contre une deuxième plaque 7 du deuxième circuit 120 si la bordure 12 est positionnée sur une plaque 7 dédiée au premier circuit 110 et inversement, est en contact contre une deuxième plaque 7 du premier circuit 110 si la bordure 12 est positionnée sur une plaque 7 dédiée au deuxième circuit 120.

Comme illustré aux figures 2 à 4, le premier collecteur d'entrée 1 et le premier collecteur de sortie 2 du premier circuit 110 sont disposés à une même première extrémité longitudinale 13 de l'échangeur thermique 100. Ceci a pour avantage de faire circuler dans chaque groupe de chambres 61,62 le fluide caloporteur du premier circuit 110 dans un même sens dans les chambres 6 destinées au premier circuit 110.

Le deuxième collecteur d'entrée 3 et le deuxième collecteur de sortie 4 du deuxième circuit 120 sont disposés à une deuxième extrémité longitudinale 14 de l'échangeur thermique 100, opposée à la première extrémité longitudinale 13. Ceci ayant pour avantage de faire circuler en sens contraire le fluide caloporteur du premier circuit 110 et du deuxième circuit 120 au sein d'un même groupe de chambres 61,62 et d'établir ainsi un bon coefficient d'échange thermique entre les deux circuits 110,120. Ceci a aussi pour avantage de faire circuler dans chaque groupe de chambres 61,62 le fluide caloporteur du deuxième circuit 120 dans un même sens dans les chambres 6 destinées au deuxième circuit 120.

Le collecteur supplémentaire 5 est positionné à l'extrémité longitudinale 13,14 opposée au collecteur d'entrée 1,3 et de sortie 2,4 auxquels il est fluidiquement relié.

Les collecteurs 1 à 5 disposés à une même extrémité longitudinale 13,14 de l'échangeur thermique 100 sont disposés préférentiellement sur une même droite.

Les collecteurs d'entrée 1,3 du premier et deuxième circuits 110, 120 comprennent chacun un canal d'alimentation 15 visible à la figure 1 et destiné à alimenter respectivement le premier circuit 110 en fluide caloporteur ou le deuxième circuit 120 en fluide caloporteur.

Les collecteurs de sortie 2,4 du premier et deuxième circuits 110, 120 comprennent chacun un canal de sortie 16 visible à la figure 1 et destiné à évacuer respectivement le premier circuit 110 en fluide caloporteur ou le deuxième circuit 120 en fluide caloporteur.

Comme représenté à la figure 1, les canaux d'alimentation 15 et les canaux de sortie 16 sont positionnés sur une même face de l'échangeur thermique 100. Ceci ayant pour avantage de réunir d'un même côté de l'échangeur thermique 100 l'ensemble des tubulures du premier et deuxième circuits 110, 120 et ainsi de réduire l'encombrement de l'échangeur thermique 100 tout en simplifiant son installation dans le véhicule.

Préférentiellement, les ouvertures 10 de chaque collecteur 1 à 5 sont de même dimension, cependant, l'invention permet aussi, par des moyens simples non illustrés dans les figures tels que la réalisation d'ouvertures 10 de dimensions différentes dans les plaques 7 du premier groupe de chambre 61 par rapport aux ouvertures 10 des plaques 7 du deuxième groupe de chambres 62, de réaliser une modification du débit de fluide caloporteur au sein d'un tel échangeur 100, pour un temps de séjour augmenté ou réduit lors du premier sens d'écoulement du fluide ou lors du deuxième sens d'écoulement du fluide, et donc d'améliorer l'efficacité de l'échange thermique.

Selon un premier mode de réalisation de l'invention tel que visible aux figures 2 à 5, le collecteur supplémentaire 5 du premier circuit 110 est disposé entre le deuxième collecteur d'entrée 3 et le deuxième collecteur de sortie 4 du deuxième circuit 120. Le collecteur supplémentaire 5 du deuxième circuit 120 est disposé entre le premier collecteur d'entrée 1 et le premier collecteur de sortie 2 du premier circuit 110. Ceci ayant pour avantage d'obtenir des plaques 7 de conformation identique pour chaque groupe de chambres 61,62, les plaques 7 destinées au deuxième circuit 120 étant simplement montées à l'assemblage pivotées de 180° par rapport à celles du premier circuit 110. L'assemblage des plaques 7 en est grandement facilité et ceci permet aussi avantageusement de réduire le nombre de références différentes et donc de réduire les coûts d'outillage pour l'obtention de l'échangeur thermique 100. La confirmation identique s'étend d'une identité de formes ayant un rôle actif pour l'invention, les formes non essentielles étant négligées dans cette comparaison.

Selon un second mode de réalisation de l'invention non représenté dans les figures et de façon alternative au premier mode de réalisation, le collecteur supplémentaire 5 du premier circuit 110 peut être disposé dans le prolongement d'une droite passant par le deuxième collecteur d'entrée 3 et le deuxième collecteur de sortie 4 du deuxième circuit 120. De la même façon, le collecteur supplémentaire 5 du deuxième circuit 120 peut être disposé dans le prolongement d'une droite passant par le premier collecteur d'entrée 1 et le premier collecteur de sortie 2 du premier circuit 110.

Le fluide caloporteur passant par le premier circuit 110 ou le deuxième circuit 120 peut être un fluide en phase gazeuse, ou en phase liquide lorsqu'il circule dans l'échangeur thermique 100. Le fluide caloporteur pouvant aussi être au sein d'une chambre 6 dans une phase différente d'une autre chambre 6.

Selon un exemple de réalisation, le fluide caloporteur du premier circuit 110 est un fluide réfrigérant et le fluide caloporteur du deuxième circuit 120 est une eau glycolée.

Selon un autre exemple de réalisation, le fluide caloporteur du premier circuit 110 et le fluide caloporteur du deuxième circuit 120 peuvent être le même fluide mais dans des phases différentes lorsqu'il circule au sein de l'échangeur thermique 100.

L'invention vise également une utilisation de l'échangeur thermique 100 tel qu'il est décrit dans le présent document en tant que condenseur. Au cours d'une telle utilisation, le premier groupe de chambres 61 est une zone de condensation du fluide réfrigérant et le deuxième groupe de chambres 62 est une zone de sous-refroidissement du fluide réfrigérant. Dans de tels échangeurs, également connus sous la dénomination anglo-saxonne de water-cooled condenser, le fluide réfrigérant est admis dans un premier sens d'écoulement du fluide du premier circuit 110 sous forme gazeuse, puis, circulant successivement dans le deuxième sens d'écoulement du fluide du premier circuit 110, au contact des différents groupes de chambres 61,62 du deuxième circuit 120 dans lesquelles circule le liquide caloporteur, il est progressivement condensé, jusqu'à sortir de l'échangeur 100 sous forme liquide.

## Revendications

1. Echangeur thermique (100) pour véhicule automobile, comprenant :
- un premier circuit (110) destiné à être parcouru par un fluide caloporteur et comprenant un premier collecteur d'entrée (1) par lequel le fluide caloporteur est admis dans le premier circuit (110) et un premier collecteur de sortie (2) par lequel le fluide caloporteur sort du premier circuit (110),
- un deuxième circuit (120) destiné à être parcouru par un fluide caloporteur, fluidiquement distinct du premier circuit (110) et comprenant un deuxième collecteur d'entrée (3) par lequel le fluide caloporteur est admis dans l'échangeur thermique (100) et un deuxième collecteur de sortie (4) par lequel le fluide caloporteur sort de l'échangeur thermique (100),
au moins le premier circuit (110) ou le deuxième circuit (120) comprend un collecteur supplémentaire (5) s'étendant dans la même direction que les collecteurs d'entrées (1,3) et de sorties (2,4) du premier (110) et deuxième (120) circuits et distinct desdits collecteurs (1-4) et en ce que les collecteurs d'entrée (1,3) du premier et deuxième circuits (110, 120) comprennent chacun un canal d'alimentation (15) destiné à alimenter respectivement le premier circuit (110) en fluide caloporteur ou le deuxième circuit (120) en fluide caloporteur, et dans lequel les collecteurs de sortie (2,4) du premier et deuxième circuits (110, 120) comprennent chacun un canal de sortie (16) destiné à évacuer respectivement le premier circuit (110) en fluide caloporteur ou le deuxième circuit (120) en fluide caloporteur et en ce que les canaux d'alimentation (15) et les canaux de sortie (16) sont positionnés sur une même face de l'échangeur thermique (100),
l'échangeur thermique étant **caractérisé en ce que** chacun des circuits (110, 120) comprend une pluralité de chambres (6) reliées fluidiquement aux collecteurs d'entrée (1,3) et de sortie (2,4) soit du premier circuit (110) soit du deuxième circuit (120) et dans lequel l'échangeur thermique (100) comprend un premier groupe de chambres (61) et un deuxième groupe de chambres (62), le premier groupe de chambres (61) étant séparé du deuxième groupe de chambres (62) par au moins une plaque déflectrice (11) destinée à imposer pour au moins le premier circuit (110) ou le deuxième circuit (120) une circulation au sein du premier groupe de chambres (61) selon un premier sens d'écoulement du fluide et d'imposer une circulation au sein du deuxième groupe de chambres (62) selon un deuxième sens d'écoulement du fluide.

2. Echangeur thermique (100) selon la revendication précédente, dans lequel chaque chambre (6) est délimitée par au moins deux plaques (7), chaque plaque (7) comprenant une paroi de fond (8) entourée par un bord relevé (9), la paroi de fond (8) étant pourvue d'une ouverture (10) par collecteur (1-5) qui délimite au moins en partie chaque collecteur d'entrée (1,3) ou de sortie (2,4) ou supplémentaire (5), les deux plaques (7) étant disposées l'une dans l'autre.

3. Echangeur thermique (100) selon la revendication 1, dans lequel l'au moins une plaque déflectrice (11) comprend une paroi de fond (8) dépourvue d'ouverture (10) au sein du premier collecteur d'entrée (1) ou du deuxième collecteur d'entrée (3), selon le circuit (110, 120) destiné à avoir un deuxième sens d'écoulement du fluide.

4. Echangeur thermique (100) selon l'une quelconque des revendications précédentes, dans lequel le premier circuit (110) et le deuxième circuit (120) comprennent chacun un collecteur supplémentaire (5).

5. Echangeur thermique (100) selon l'une quelconque des revendications 1 à 4, dans lequel l'échangeur thermique (100) comprend deux plaques déflectrices (11), permettant de réaliser un deuxième sens d'écoulement du fluide pour le premier circuit (110) et le deuxième circuit (120).

6. Echangeur thermique (100) selon l'une quelconque des revendications précédentes, dans lequel le premier collecteur d'entrée (1) et le premier collecteur de sortie (2) du premier circuit (110) sont disposés à une même première extrémité longitudinale (13) de l'échangeur thermique (100) et/ou dans lequel le deuxième collecteur d'entrée (3) et le deuxième collecteur de sortie (4) du deuxième circuit (120) sont disposés à une deuxième extrémité longitudinale (14) de l'échangeur thermique (100), opposée à la première extrémité longitudinale (13).

7. Echangeur thermique (100) selon la revendication précédente, dans lequel le collecteur supplémentaire (5) est positionné à l'extrémité longitudinale (13,14) opposée au collecteur d'entrée (1,3) et de sortie (2,4) auxquels il est fluidiquement relié.

8. Echangeur thermique (100) selon l'une quelconque des revendications précédentes, dans lequel le collecteur supplémentaire (5) du premier circuit (110) est disposé entre le deuxième collecteur d'entrée (3) et le deuxième collecteur de sortie (4) du deuxième circuit (120).

9. Echangeur thermique (100) selon l'une quelconque des revendications précédentes, dans lequel le collecteur supplémentaire (5) du deuxième circuit (120) est disposé entre le premier collecteur d'entrée (1) et le premier collecteur de sortie (2) du premier circuit (110).

## Patentansprüche

1. Wärmetauscher (100) für ein Kraftfahrzeug, umfassend:
- einen ersten Kreislauf (110), der dazu bestimmt ist, von einem Wärmeträgerfluid durchströmt zu werden und einen ersten Einlasssammler (1), durch den das Wärmeträgerfluid in den ersten Kreislauf (110) eingelassen wird, und einen ersten Auslasssammler (2) umfasst, durch den das Wärmeträgerfluid aus dem ersten Kreislauf (110) austritt,
- einen zweiten Kreislauf (120), der dazu bestimmt ist, von einem Wärmeträgerfluid durchströmt zu werden, fluidisch getrennt vom ersten Kreislauf (110) und umfassend einen zweiten Einlasssammler (3), durch den das Wärmeträgerfluid in den Wärmetauscher (100) eingelassen wird, und einen zweiten Auslasssammler (4), durch den das Wärmeträgerfluid aus dem Wärmetauscher (100) austritt,
wobei mindestens der erste Kreislauf (110) oder der zweite Kreislauf (120) einen zusätzlichen Sammler (5) umfasst, der sich in der gleichen Richtung wie die Einlasssammler (1,3) und Auslasssammler (2,4) des ersten (110) und zweiten (120) Kreislaufs erstreckt und von den genannten Sammlern (1-4) verschieden ist, und dadurch, dass die Einlasssammler (1,3) des ersten und zweiten Kreislaufs (110, 120) jeweils einen Versorgungskanal (15) umfassen, der dazu bestimmt ist, den ersten Kreislauf (110) mit Wärmeträgerfluid bzw. den zweiten Kreislauf (120) mit Wärmeträgerfluid zu versorgen, und wobei die Auslasssammler (2,4) des ersten und zweiten Kreislaufs (110, 120) jeweils einen Auslasskanal (16) umfassen, der dazu bestimmt ist, das Wärmeträgerfluid aus dem ersten Kreislauf (110) bzw. aus dem zweiten Kreislauf (120) abzuführen, und dadurch, dass die Versorgungskanäle (15) und die Auslasskanäle (16) auf derselben Seite des Wärmetauschers (100) positioniert sind,
wobei der Wärmetauscher **dadurch gekennzeichnet ist, dass** jeder der Kreisläufe (110, 120) eine Vielzahl von Kammern (6) umfasst, die fluidisch mit den Einlasssammlern (1,3) und Auslasssammlern (2,4) entweder des ersten Kreislaufs (110) oder des zweiten Kreislaufs (120) verbunden sind, und wobei der Wärmetauscher (100) eine erste Gruppe von Kammern (61) und eine zweite Gruppe von Kammern (62) umfasst, wobei die erste Gruppe von Kammern (61) von der zweiten Gruppe von Kammern (62) durch mindestens eine Ablenkplatte (11) getrennt ist, die dazu bestimmt ist, für mindestens den ersten Kreislauf (110) oder den zweiten Kreislauf (120) eine Zirkulation innerhalb der ersten Gruppe von Kammern (61) gemäß einer ersten Fluidströmungsrichtung zu erzwingen und eine Zirkulation innerhalb der zweiten Gruppe von Kammern (62) gemäß einer zweiten Fluidströmungsrichtung zu erzwingen.

2. Wärmetauscher (100) nach dem vorhergehenden Anspruch, wobei jede Kammer (6) durch mindestens zwei Platten (7) begrenzt ist, wobei jede Platte (7) eine Bodenwand (8) umfasst, die von einem erhöhten Rand (9) umgeben ist, wobei die Bodenwand (8) mit einer Öffnung (10) pro Sammler (1-5) versehen ist, die zumindest teilweise jeden Einlasssammler (1,3) oder Auslasssammler (2,4) oder zusätzlichen Sammler (5) begrenzt, wobei die beiden Platten (7) ineinander angeordnet sind.

3. Wärmetauscher (100) nach Anspruch 1, wobei die mindestens eine Ablenkplatte (11) eine Bodenwand (8) umfasst, die keine Öffnung (10) im ersten Einlasssammler (1) oder im zweiten Einlasssammler (3) aufweist, je nach dem Kreislauf (110, 120), der dazu bestimmt ist, eine zweite Fluidströmungsrichtung zu haben.

4. Wärmetauscher (100) nach einem der vorhergehenden Ansprüche, wobei der erste Kreislauf (110) und der zweite Kreislauf (120) jeweils einen zusätzlichen Sammler (5) umfassen.

5. Wärmetauscher (100) nach einem der Ansprüche 1 bis 4, wobei der Wärmetauscher (100) zwei Ablenkplatten (11) umfasst, die es ermöglichen, eine zweite Fluidströmungsrichtung für den ersten Kreislauf (110) und den zweiten Kreislauf (120) zu realisieren.

6. Wärmetauscher (100) nach einem der vorhergehenden Ansprüche, wobei der erste Einlasssammler (1) und der erste Auslasssammler (2) des ersten Kreislaufs (110) an einem gleichen ersten Längsende (13) des Wärmetauschers (100) angeordnet sind und/oder wobei der zweite Einlasssammler (3) und der zweite Auslasssammler (4) des zweiten Kreislaufs (120) an einem zweiten Längsende (14) des Wärmetauschers (100) angeordnet sind, das dem ersten Längsende (13) gegenüberliegt.

7. Wärmetauscher (100) nach dem vorhergehenden Anspruch, wobei der zusätzliche Sammler (5) an dem Längsende (13,14) positioniert ist, das dem Einlasssammler (1,3) und dem Auslasssammler (2,4) gegenüberliegt, mit denen er fluidisch verbunden ist.

8. Wärmetauscher (100) nach einem der vorhergehenden Ansprüche, wobei der zusätzliche Sammler (5) des ersten Kreislaufs (110) zwischen dem zweiten Einlasssammler (3) und dem zweiten Auslasssammler (4) des zweiten Kreislaufs (120) angeordnet ist.

9. Wärmetauscher (100) nach einem der vorhergehenden Ansprüche, wobei der zusätzliche Sammler (5) des zweiten Kreislaufs (120) zwischen dem ersten Einlasssammler (1) und dem ersten Auslasssammler (2) des ersten Kreislaufs (110) angeordnet ist.

## Claims

1. Heat exchanger (100) for a motor vehicle, comprising:
- a first circuit (110) intended to be traversed by a heat transfer fluid and comprising a first inlet manifold (1) through which the heat transfer fluid is admitted into the first circuit (110) and a first outlet manifold (2) through which the heat transfer fluid exits the first circuit (110),
- a second circuit (120) intended to be traversed by a heat transfer fluid, fluidically distinct from the first circuit (110) and comprising a second inlet manifold (3) through which the heat transfer fluid is admitted into the heat exchanger (100) and a second outlet manifold (4) through which the heat transfer fluid exits the heat exchanger (100),
at least the first circuit (110) or the second circuit (120) comprises an additional manifold (5) extending in the same direction as the inlet manifolds (1,3) and outlet manifolds (2,4) of the first (110) and second (120) circuits and distinct from said manifolds (1-4) and wherein the inlet manifolds (1,3) of the first and second circuits (110, 120) each comprise a supply channel (15) intended to supply respectively the first circuit (110) with heat transfer fluid or the second circuit (120) with heat transfer fluid, and wherein the outlet manifolds (2,4) of the first and second circuits (110, 120) each comprise an outlet channel (16) intended to evacuate respectively the first circuit (110) of heat transfer fluid or the second circuit (120) of heat transfer fluid and wherein the supply channels (15) and the outlet channels (16) are positioned on the same face of the heat exchanger (100),
the heat exchanger being **characterized in that** each of the circuits (110, 120) comprises a plurality of chambers (6) fluidically connected to the inlet manifolds (1,3) and outlet manifolds (2,4) of either the first circuit (110) or the second circuit (120) and wherein the heat exchanger (100) comprises a first group of chambers (61) and a second group of chambers (62), the first group of chambers (61) being separated from the second group of chambers (62) by at least one baffle plate (11) intended to impose for at least the first circuit (110) or the second circuit (120) a circulation within the first group of chambers (61) according to a first fluid flow direction and to impose a circulation within the second group of chambers (62) according to a second fluid flow direction.

2. Heat exchanger (100) according to the preceding claim, wherein each chamber (6) is delimited by at least two plates (7), each plate (7) comprising a bottom wall (8) surrounded by a raised edge (9), the bottom wall (8) being provided with an opening (10) per manifold (1-5) which delimits at least in part each inlet manifold (1,3) or outlet manifold (2,4) or additional manifold (5), the two plates (7) being arranged one inside the other.

3. Heat exchanger (100) according to claim 1, wherein the at least one baffle plate (11) comprises a bottom wall (8) without an opening (10) within the first inlet manifold (1) or the second inlet manifold (3), according to the circuit (110, 120) intended to have a second fluid flow direction.

4. Heat exchanger (100) according to any one of the preceding claims, wherein the first circuit (110) and the second circuit (120) each comprise an additional manifold (5).

5. Heat exchanger (100) according to any one of claims 1 to 4, wherein the heat exchanger (100) comprises two baffle plates (11), allowing for a second fluid flow direction for the first circuit (110) and the second circuit (120).

6. Heat exchanger (100) according to any one of the preceding claims, wherein the first inlet manifold (1) and the first outlet manifold (2) of the first circuit (110) are arranged at a same first longitudinal end (13) of the heat exchanger (100) and/or wherein the second inlet manifold (3) and the second outlet manifold (4) of the second circuit (120) are arranged at a second longitudinal end (14) of the heat exchanger (100), opposite to the first longitudinal end (13).

7. Heat exchanger (100) according to the preceding claim, wherein the additional manifold (5) is positioned at the longitudinal end (13,14) opposite to the inlet manifold (1,3) and outlet manifold (2,4) to which it is fluidically connected.

8. Heat exchanger (100) according to any one of the preceding claims, wherein the additional manifold (5) of the first circuit (110) is arranged between the second inlet manifold (3) and the second outlet manifold (4) of the second circuit (120).

9. Heat exchanger (100) according to any one of the preceding claims, wherein the additional manifold (5) of the second circuit (120) is arranged between the first inlet manifold (1) and the first outlet manifold (2) of the first circuit (110).
